# EUROPEAN PATENT SPECIFICATION

(11) **EP 1 087 171 B1**
(45) Date of publication and mention of the grant of the patent: **21.04.2004**
(21) Application number: 00117921.7
(22) Date of filing: 21.08.2000
(51) Int. Cl.: F16L 47/02, B29D 23/00, B29C 61/06, B29C 65/34

(54) **Electric welding sleeve and method of making same**
Elektroschweissmuffe und Verfahren zu ihrer Herstellung
Manchon d'électrosoudage et procédé pour sa fabrication

(30) Priority: 27.08.1999 DK 119299
(43) Date of publication of application: 28.03.2001
(73) Proprietor: A/S Star Pipe, 7000 Fredericia (DK)
(72) Inventor: Rasmussen, Jan, 7000 Fredericia (DK)
(74) Representative: Roerboel, Leif

(56) References cited:
- EP-A- 0 008 912
- WO-A-84/03346
- WO-A-96/38288
- CH-A- 423 382
- CH-A- 662 402
- DE-U- 8 427 320
- FR-A- 2 594 379
- GB-A- 2 076 489
- GB-A- 2 325 501
- US-A- 5 478 118

## Description

### TECHNICAL FIELD

The present invention relates to an electric welding sleeve of thermoplastic material for connecting thermoplastic pipe sections as defined in the preamble of claim 1 and a method of making such a welding sleeve as stated in the preamble of claim 6.

### BACKGROUND ART

In electric welding sleeves of this kind it is known to construct the welding sleeve as a tubular sleeve with an electric resistance-heating element in the shape of a spiral-wound heating wire located on the inner surface of the sleeve. The spiral-wound heating wire will greatly prevent any radial movement of the sleeve so that in connection with such constructions it is difficult to provide an actual welding pressure when the sleeve is welded on to the thermoplastic pipe sections that are to be connected by means of this sleeve. A welding sleeve of this kind is known from US-4,362,684, describing an electric welding sleeve of contractible thermoplastic material. However, as disclosed in this document, it is necessary in order to provide a satisfactory welding that the spiral-wound electric resistance-heating element is embedded in a thermoplastic material which primarily fills in the gap between the contraction sleeve and the pipe sections to be welded together. By so doing, however, it becomes rather difficult to move the sleeve axially relative to the pipe sections and thus, such a sleeve is not suited for use in connection with welding together of the casings in connection with pre-insulated district heating pipes with plastic protective cover. Because in connection with such pipes, the sleeve must first be slided over the casing to provide the actual assembling of the fluid pipe whereafter the sleeve must be slided over said assembly for providing the connection between the casings. Such an operation is made in the field, in a pipe excavation, for which reason these operations must be carried out in an easy and unhindered way.

CH 423 382 describes an electrically heated sleeve of thermoplastic material for connecting pipe sections, said sleeve comprising a tubular sleeve and at least one electric resistance-heating element. The tubular sleeve has heat-contracting properties and the electric resistance-heating element is designed so as to follow the radial contraction of the sleeve without essential resistance to this and is positioned inside the sleeve and extends primarily circumferentially inside the sleeve. The formation of the electric resistance-heating element comprises undulations of the wire in a radial direction relative to the sleeve. The undulations are restricted to the thickness of the sleeve and will thus only allow a relatively small radial extension and/or contraction. This will not allow a relatively large distance between the sleeve and the pipe sections to be connected thereby, unless the thickness of the sleeve material is relatively large.

GB 2 325 501 describes a similar construction, in which the electric resistance-heating element is positioned in a separate plastic material. The radial expansion/contraction is supposed to be available by forming the electric resistance-heating element of a wire cage or a cage of corrugated, perforated metal, which again does not allow for a relatively large radial extension and contraction.

Neither CH 423 382 nor GB 2 325 501 requires a relatively large contraction and nothing in these documents indicates this as a problem for the intended use of these constructions.

### DISCLOSURE OF THE INVENTION

In the light of this prior art, it is the object of the present invention to provide an electric welding sleeve of the kind mentioned above, with which it is possible to obtain a considerable clearance between the welding sleeve and the pipe sections to be welded together by means of said welding sleeve in connection with the assembling of said elements, and where a subsequent heat contraction of the welding sleeve provides a sufficient welding pressure for obtaining a good welding connection between the sleeve and the pipe sections before applying electric current to the electric resistance-heating element for providing the welding. This object is obtained by means of a welding sleeve of the kind mentioned in the introduction, which according to the invention comprises the features stated in the characterizing portion of claim 1. This arrangement renders possible with a considerable clearance between the sleeve and the pipe sections still by heat contraction of the sleeve to achieve a secure connection between the sleeve and the pipe sections for obtaining a considerable welding pressure during the welding. Contrary to certain prior-art welding sleeves, the present welding sleeve is supplied as an aggregate unit integrating the electric resistance-heating element in the welding sleeve.

Further, it is an object of the invention to provide a method of making such a welding sleeve rendering possible to manufacture the welding sleeve in a simple manner, since the tangential flexibility of the electric resistance-heating element is utilized by the method so that the contraction properties of the sleeve by widening the sleeve at an increased temperature can be made with the heating element secured to the sleeve or alternatively that the heating element can be secured to the sleeve after widening but before contraction. Such methods are stated in claims 6 and 7.

Advantageous further elaborate developments of the welding sleeve according to claim 1 are stated in the subordinate claims 2-5.

### BRIEF DESCRIPTION OF THE DRAWINGS

In the following detailed part of the present description, the invention is explained in more detail with reference to the embodiments of a welding sleeve according to the invention, as shown in the drawing, in which
Figure 1 roughly shows a welding sleeve in accordance with the invention before widening of the sleeve for producing contraction properties, with a heating wire of a meander-shaped course secured to the inner surface of the sleeve,
Figure 2 shows a welding sleeve in accordance with the invention disposed over an assembly of pre-insulated district heating pipes before contraction of the welding sleeve,
Figure 3 shows an enlarged segment of Figure 2, and
Figure 4 shows a corresponding enlarged segment after contraction of the welding sleeve but before welding.

### DESCRIPTION OF THE PREFERRED EMBODIMENT

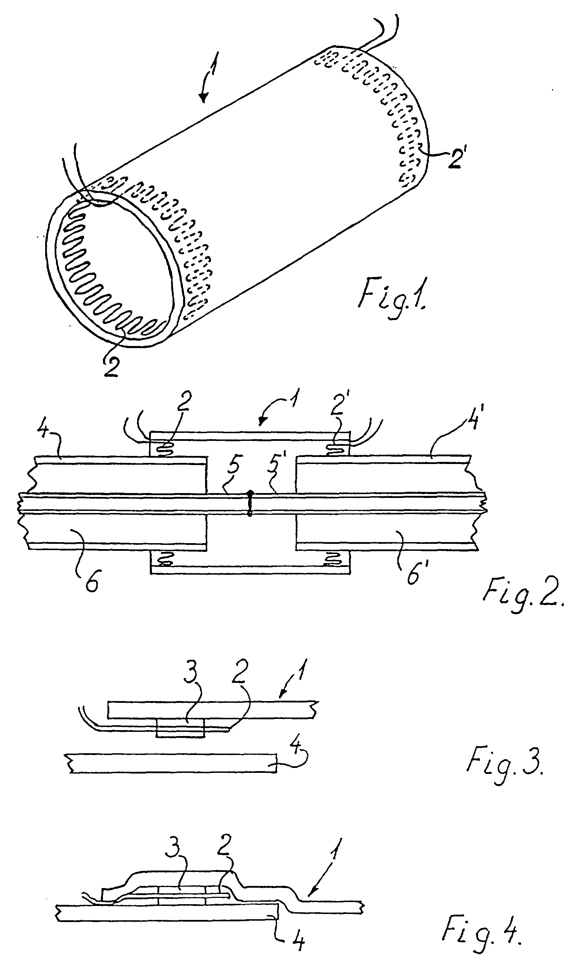

The electric welding sleeve shown in Figure 1 consists of a thermoplastic material and is at each of its ends provided with an electric resistance-heating element 2, 2' for producing a fusion welding between the welding sleeve 1 and the thermoplastic pipe sections 4, 4' (cf. Fig. 2) to be joined by means of the welding sleeve.

In Figure 2, the welding sleeve is shown disposed over a joint between two pre-insulated district heating pipes comprising fluid pipe 5, 5', insulation 6 and casings 4, 4' of thermoplastic material, e.g. PEH (High Density Polyethylene), to be joined by means of the welding sleeve 1. Said welding sleeve 1 is in Figure 2 shown in its widened state where it has heat contraction properties and the welding sleeve 1 is preferably made from the same material with the same dimension as the casings 4, 4', but widened to an oversize at increased temperature to attain heat contraction properties. The electric resistance-heating elements 2, 2' are in the embodiment shown secured to the inner surface of the welding sleeve 1 before the latter is widened to the oversize shown in Figure 2 and the electric resistance-heating elements are constructed from a resistance heating wire, e.g. a copper wire, with a primarily meander-shaped course, where the main part of the heating wire extends in the axial direction of the sleeve 1. By this the electric resistance-heating element is stretched and contracted radially along with the sleeve substantially without resisting to this stretching and contraction, respectively. The securing of the heating element 2, 2' to the sleeve 1 is in the embodiment shown produced by the electric resistance-heating element 2, 2' being formed in a meander shape and embedded in a strap 3 from thermoplastic material for retaining the wire in the meander-shaped course. Upon this, the resistance-heating element is disposed on the inner surface of the sleeve 1 and pressed against this surface by means of a mandrel and by applying current to the resistance-heating element the strap 3 and the resistance-heating element are fusion welded to the inner surface of the sleeve 1. After securing the electric resistance-heating elements 2, 2' to the sleeve 1, the sleeve 1 is widened on a mandrel at increased temperature to an oversize as shown in Figure 2 so that the sleeve 1 possesses heat-contracting properties.

The sleeve is mounted over one of the casings 4, 4' at distance from the assembly between the fluid pipes 5, 5' and the two pre-insulated district heating pipes are welded together in the open area between the casings 4, 4'. After said welding of the fluid pipes 5, 5', the sleeve 1 is slided over the gap between the casings 4, 4', possibly by preceding disposing of insulation over the joint, and the sleeve 1 is heat-contracted over said connection in order to attain intimate contact between the sleeve 1 and the casings 4, 4', as shown in Figure 4. After heat contraction, current is applied to the electric resistance-heating elements 2, 2' for producing a welding between the sleeve 1 and the casings 4, 4'. A welding pressure is obtained in such a manner that the area around the electric resistance-heating elements still has a certain heat-contracting property, since originally the sleeve 1 had the same dimension as the casing 4, 4'.

Above, the welding sleeve is described to be manufactured by first securing the electric resistance-heating element 2, 2' to the welding sleeve 1, before widening of this for attaining heat-contracting properties, but of course the welding sleeve 1 can be widened before securing of the electric resistance-heating element 2, 2' to the inner surface of the sleeve, as the meander-shaped embodiment of the electric resistance-heating element secures that this can follow the contraction of the sleeve whether the electric resistance-heating element is widened along with the sleeve or not.

## Claims

1. Electric welding sleeve (1) of thermoplastic material for connecting thermoplastic pipe sections (4, 4') comprising
a tubular sleeve (1) and at least one electric resistance-heating element (2), the tubular sleeve (1) having heat-contracting properties and the at least one electric resistance-heating element (2) being designed so as to follow the radial contraction of the sleeve (1) without essential resistance to this and is connected to the inner side of the sleeve (1) and extends primarily circumferentially along the inner surface of the sleeve (1),
**characterized in that** the at least one electric resistance-heating element (2) is constructed from a heating wire of a meander-shaped course so that the heating wire (2) extends primarily in the axial direction of the sleeve.

2. Electric welding sleeve according to claim 1, **characterized in that** the electric resistance-heating element is embedded in a strap (3) of thermoplastic material, which is welded to the inner surface of the sleeve (1).

3. Electric welding sleeve according to any of the claims 1 or 2, **characterized in that** the welding sleeve comprises a welding zone at each end of the sleeve (1) each with its own electric resistance-heating element (2, 2').

4. Electric welding sleeve according to any of the preceding claims, **characterized in that** the thermoplastic material, from which the sleeve (1) is made, consists of PEH plastic material.

5. Electric welding sleeve according to any of the preceding claims, **characterized in that** the electric resistance-heating element (2, 2') consists of copper wire.

6. Method of making a welding sleeve of thermoplastic material for connecting thermoplastic pipe sections, **characterized by** comprising the following steps:
a) providing a pipe section from thermoplastic material with thermal memory,
b) securing an electric resistance-heating element (2, 2') to the inner surface of the welding sleeve (1), said element being designed so as to follow the radial widening and contraction of said pipe section without yielding essential resistance to these by being constructed from a heating wire of a meander-shaped course so that the heating wire (2) extends primarily in the axial direction of the sleeve, and
c) widening the welding sleeve (1) including the electric resistance-heating element (2, 2') at an increased temperature and subsequent cooling in order to obtain a heat-contraction function.

7. Method of making a welding sleeve of thermoplastic material for connecting thermoplastic pipe sections, **characterized by** comprising the following steps:
a) providing a pipe section (1) from thermoplastic material with thermal memory,
b) widening said pipe section at an increased temperature and subsequent cooling for obtaining a heat-contraction function and
c) securing an electric resistance-heating element (2, 2') to the inner surface of the welding sleeve (1), said element being designed so as to follow the radial contraction of said pipe section without yielding essential resistance to this by being constructed from a heating wire of a meander-shaped course so that the heating wire (2) extends primarily in the axial direction of the sleeve.

## Patentansprüche

1. Elektroschweissmuffe (1) aus thermoplastischem Material zur Verbindung thermoplastischer Rohrabschnitte (4, 4'), umfassend
eine Rohrmuffe (1) mit Wärme-Kontraktionseigenschaften und zumindest ein elektrisches Widerstandsheizelement (2), das so gestaltet ist, dass es der radialen Kontraktion der Muffe (1) ohne wesentlichen Widerstand gegen sie folgt, und mit der Innenseite der Muffe (1) verbunden ist, und sich in erster Linie entlang dem Umfang ihrer Innenfläche erstreckt,
**dadurch gekennzeichnet, dass** das zumindest eine elektrische Widerstandsheizelement (2) aus einem mäandrisch verlaufenden Heizdraht aufgebaut ist, so dass der Heizdraht (2) sich in erster Linie in die axiale Richtung der Muffe erstreckt.

2. Elektroschweissmuffe nach Anspruch 1, **dadurch gekennzeichnet, dass** das elektrische Widerstandsheizelement in ein Band (3) aus thermoplastischem Material gebettet ist, das an die Innenfläche der Muffe (1) geschweisst ist.

3. Elektroschweissmuffe nach Anspruch 1 oder 2, **dadurch gekennzeichnet, dass** die Schweissmuffe eine Schweisszone an jedem Ende der Muffe (1) aufweist, jedes mit seinem eigenen elektrischen Widerstandsheizelement (2, 2').

4. Elektroschweissmuffe nach einem der vorstehenden Ansprüche, **dadurch gekennzeichnet, dass** das thermoplastische Material, aus dem die Muffe (1) gefertigt ist, aus einem PEH Plast besteht.

5. Elektroschweissmuffe nach einem der vorstehenden Ansprüche, **dadurch gekennzeichnet, dass** das elektrische Widerstandsheizelement (2, 2') aus Kupferdraht besteht.

6. Verfahren zur Herstellung einer Schweissmuffe aus thermoplastischem Material, zur Verbindung thermoplastischer Rohrabschnitte, **dadurch gekennzeichnet, dass** es die folgenden Schritte umfasst:
a) Schaffen eines Rohrabschnitts aus thermoplastischem Material mit einem Wärmegedächtnis,
b) Befestigen eines elektrischen Widerstandsheizelements (2, 2') an der Innenfläche der Schweissmuffe (1), wobei das Element so gestaltet ist, dass es dem radialen Weiten und der radialen Kontraktion des Rohrabschnitts folgt, ohne diesen wesentlichen Widerstand entgegen zu setzen, indem es aus einem Heizdraht mit mäandrischem Verlauf aufgebaut ist, so dass der Heizdraht (2) sich in erster Linie in die axiale Richtung der Muffe erstreckt, und
c) Weiten der Schweissmuffe (1) mit dem elektrischen Widerstandsheizelement (2, 2') bei einer erhöhten Temperatur und anschliessendes Kühlen, um eine Wärme-Kontraktionsfunktion zu erhalten.

7. Verfahren zur Herstellung einer Schweissmuffe aus thermoplastischem Material, zur Verbindung thermoplastischer Rohrabschnitte, **dadurch gekennzeichnet, dass** es die folgenden Schritte umfasst:
a) Schaffen eines Rohrabschnitts (1) aus thermoplastischem Material mit einem Wärmegedächtnis,
b) Weiten des Rohrabschnitts bei einer erhöhten Temperatur und anschliessendes Kühlen, um eine Wärme-Kontraktionsfunktion zu erhalten,
c) Befestigen eines elektrischen Widerstandsheizelements (2, 2') an der Innenfläche der Schweissmuffe (1), wobei das Element so gestaltet ist, dass es der radialen Kontraktion des Rohrabschnitts folgt, ohne ihr wesentlichen Widerstand entgegen zu setzen, indem es aus einem Heizdraht mit mäandrischem Verlauf aufgebaut ist, so dass der Heizdraht (2) sich in erster Linie in die axiale Richtung der Muffe erstreckt.

## Revendications

1. Manchon (1) de soudage électrique en matériau thermoplastique pour relier des parties (4, 4') de tube thermoplastique comprenant un manchon tubulaire et au moins un élément de chauffage (2) par résistance électrique, le manchon tubulaire (1) présentant des propriétés de contraction à la chaleur et le au moins un élément de chauffage (2) par résistance électrique étant conçu de façon à suivre la contraction radiale du manchon (1) sans offrir de résistance importante à cette contraction, tandis qu'il est relié à la face intérieure du manchon (1) et s'étend principalement de façon circonférentielle sur la surface intérieure du manchon (1),
**caractérisé en ce que** le au moins un élément de chauffage (2) par résistance électrique et réalisé à partir d'un fil chauffant développé en forme de méandres, de sorte que le fil de chauffage (2) s'étend principalement dans la direction axiale du manchon.

2. Manchon de soudage électrique selon la revendication 1, **caractérisé en ce que** l'élément de chauffage par résistance électrique est noyé dans une bride (3) de matériau thermoplastique qui est soudée à la surface intérieure du manchon (1).

3. Manchon de soudage électrique selon l'une quelconque des revendications 1 ou 2, **caractérisé en ce que** le manchon de soudage comprend une zone de soudage à chaque extrémité du manchon (1), chacune des zones étant munie de son propre élément de chauffage (2, 2') par résistance électrique.

4. Manchon de soudage électrique selon l'une quelconque des revendications précédentes, **caractérisé en ce que** le matériau thermoplastique dans lequel est réalisé le manchon (1) se compose de PEH (polyéthylène à haute densité).

5. Manchon de soudage électrique selon l'une quelconque des revendication précédentes, **caractérisé en ce que** l'élément de chauffage (2, 2') par résistance électrique se compose de fil de cuivre.

6. Procédé de fabrication d'un manchon de soudage en matériau thermoplastique pour relier des parties de tube thermoplastique, **caractérisé en ce qu'**il comprend les étapes suivantes consistant :
a) à prévoir une partie de tube en matériau thermoplastique à mémoire thermique,
b) à fixer un élément de chauffage par résistance électrique (2, 2') à la surface intérieure du manchon de soudage (1), ledit élément étant conçu de façon à suivre l'évasement radiale et la contraction radiale de ladite partie de tube sans offrir une résistance importante à ses déplacements grâce à sa réalisation à partir d'un fil de chauffage développé en forme de méandres, de sorte que le fil de chauffage (2) s'étend principalement dans la direction axiale du manchon, et
c) à provoquer l'évasement du manchon de soudage (1) y compris l'élément de chauffage par résistance électrique (2, 2') à une température accrue et le refroidissement subséquent afin d'obtenir une fonction de contraction thermique.

7. Procédé de fabrication d'un manchon de soudage en matériau thermoplastique pour relier des parties de tube thermoplastique, **caractérisé en ce qu'**il comprend les étapes suivants consistant :
a) à prévoir une partie de tube (1) en matériau plastique à mémoire thermique,
b) à provoquer l'évasement de ladite partie de tube à une température accrue et le refroidissement subséquent pour obtenir une fonction de contraction thermique, et
c) à fixer un élément de chauffage par résistance électrique (2, 2') à la surface intérieure du manchon de soudage (1), ledit élément étant conçu de façon à suivre la contraction radiale de ladite partie de tube sans offrir une résistance importante à ce déplacement grâce à sa réalisation à partir d'un fil de chauffage développer en forme de méandres, de sorte que le fil de chauffage (2) s'étend principalement dans la direction axiale du manchon.
